# EUROPEAN PATENT APPLICATION

(11) **EP 2 420 401 A1**
(43) Date of publication of application: **22.02.2012**
(21) Application number: 10305899.6
(22) Date of filing: 19.08.2010
(51) Int. Cl.: B60L 11/18, G07F 7/00

(54) **Enhanced E-car charging equipment**

(71) Applicant: Alcatel Lucent, 75007 Paris (FR)
(72) Inventor: Kopp, Dieter, 75428, Illingen (DE); Stocker, Klaus, 70567, Stuttgart (DE); Raehmer, Silke, 75428, Illingen (DE); Templ, Wolfgang, 74372, Sersheim (DE)
(74) Representative: Wetzel, Emmanuelle

(57) **Abstract**

Method of connecting a first device and a second device, which method comprises identifying the first device to the second device by means of a first identification, identifying the second device to the first device by means of a second identification, identifying the first device and the second device to a back-end system by means of the first identification and the second identification, verifying the first identification and the second identification on the back-end system, sending a key to the first device and the second device, and, in response to receiving the key, enabling a connection between the first device and the second device.

## Description

### Background

This section introduces aspects that may be helpful in facilitating a better understanding of the invention. Accordingly, the statements of this section are to be read in this light and are not to be understood as admissions about what is in the prior art or what is not in the prior art.

In environmental technology, sustainable transport or green transport refers to any means of transport with low impact on the environment, and includes walking and cycling, transit-oriented development, green vehicles, car sharing, and building or protecting urban transport systems that are fuel-efficient, space-saving and promote healthy lifestyles. Here, a green vehicle or environmentally friendly vehicle is a road motor vehicle that produces less harmful impacts to the environment than comparable conventional internal combustion engine vehicles running on gasoline or diesel. Green vehicles are powered by alternative fuels and advanced vehicle technologies and include hybrid electric vehicles, battery electric vehicles, compressed-air vehicles, hydrogen and fuel-cell vehicles, neat ethanol vehicles, flexible-fuel vehicles, natural gas vehicles, clean diesel vehicles, and vehicles using blends of biodiesel and ethanol fuel or gasohol.

As a prominent example of a green vehicle, an electric vehicle (EV), also referred to as an electric drive vehicle, is a vehicle which uses one or more electric motors for propulsion. Depending on the type of vehicle, motion may be provided by wheels or propellers driven by rotary motors, or in the case of tracked vehicles, by linear motors. Electric vehicles can include electric cars, electric trains, electric lorries, electric airplanes, electric boats, electric motorcycles and scooters, electric kick scooters and skateboards, and electric spacecraft. An electric vehicle may take the form of a battery electric vehicle (BEV), that is, a type of electric vehicle (EV) that uses chemical energy stored in rechargeable battery packs. In the following, the term BEV is meant to encompass plug-in hybrid electric vehicles (PHEV), also known as plug-in hybrids.

The ample provision of charging stations, also called electric recharging points, charging points, or electric vehicle supply equipment (EVSE), is a crucial precondition for the recharging of BEVs to further their acceptance among consumers. Although most electric cars can be recharged from a domestic wall socket, many BEVs support faster charging at higher voltages and currents that require dedicated equipment with a specialized connector. Still, anxiety regarding range and finding charging stations can be a major concern for BEV drivers, and the complexity and cost of state-of-the-art systems has delayed the widespread deployment of such stations throughout the public sphere.

### Summary

The present invention was made in view of the prior art described above, and the object of some embodiments is to provide a practical method capable of recharging a BEV.

According to an embodiment there is provided a method of connecting a first device and a second device, which method comprises identifying the first device to the second device by means of a first identification, identifying the second device to the first device by means of a second identification, identifying the first device and the second device to a back-end system by means of the first identification and the second identification, verifying the first identification and the second identification on the back-end system, sending a key to the first device and the second device, and, in response to receiving the key, enabling a connection between the first device and the second device.

### Description of the Embodiments

Hereinafter, the best mode for carrying out a method according to an embodiment is described in detail.

In this embodiment, the first device takes the form of a charging station, whereas the second device takes the form of a BEV. For use in on-street parking, such as by integration into street lights, smart parking meters, phone booths, or taxi stands, the charging station is waterproof and may be designed for mobile use. To monitor and govern the charging process, it is further equipped with an embedded controller.

A typical BEV is configured to continuously or periodically monitor the state of charge (SOC) of its battery. In automotive technologies, SOC is the equivalent of a fuel gauge for the battery pack contained in the BEV. In response to detecting a certain charge condition, the BEV signals its envisaged power demand to a back-end system. In this context, by back-end system is meant any system that is accessed by the BEV indirectly through an external application rather than by application programming stored within the system itself or by Low-LeveL manipulation.

To facilitate communication between the back-end system and BEV, the latter supports mobile radio communication such as defined by the 3GPP Long Term Evolution (LTE) standard. Along with the power demand signal, the BEV transmits its position to the back-end system, which position can be determined through LTE or by means of the Global Positioning System (GPS). Information on the envisaged power demand as well as the current position of the BEV may enable the back-end system to prepare for the imminent energy requirement.

Upon arrival of the BEV at the charging station, the latter identifies to the BEV by means of a first identification. Preferably, the first identification is stored in such a way that tampering with the charging station, such as by destruction of its socket in an attempt to obtain access to the electric power conductor attached thereto, would inevitably annihilate the identification and prevent further energy extraction on the part of the BEV. In this scenario, upon failing to exchange identification with a charging station, the BEV would signal an error to the back-end system, causing the latter to disable any connection between charging station and BEV and initiate error handling.

Conversely, the BEV identifies to the charging station by means of a second identification. In this process, in addition to identifying itself as a device, the BEV may further identify its operator for purposes of billing and accounting, such as by means of a radio-frequency identification tag indicating the vehicle owner or transmittal of credit card information in the case of a hired vehicle.

Having exchanged their identifications mutually, the charging station and BEV further identify to the back-end system by means of the first and second identification, respectively. To this end, the embodiment may allow for a variety of communication channels, some of which are described below.

Preferably, the charging station and back-end communicate over an electrical grid which is also employed to supply electricity to the charging station. To minimize the use of mobile radio communication on the part of the BEV, the latter may employ the established communication channel of the charging station to connect to the back-end system. Conversely, in an alternative embodiment, the charging station may leverage the mobile communication channel in place between the BEV and back-end system instead of utilizing the electrical grid.

Upon receiving the first and second identifications, the back-end system verifies them. To this end, the back-end system may comprise a database of valid charging station and BEV identifications. To further provide for non-repudiation on the part of the owner or operator of the BEV, the identification may feature a digital signature, that is, a mathematical scheme for demonstrating the authenticity of a digital message or document. A valid digital signature gives the back-end system reason to assume that the message was created by the claimed sender, and that it was not altered in transit.

Upon successful verification, the back-end system sends an enabler key to both the charging station and BEV, allowing both systems to establish their mutual connection. In cryptography, a key is a parameter that determines the functional output of a cryptographic algorithm or cipher, such as required by a digital signature scheme or message authentication code.

To allow for electric power transmission between the charging station and BEV, the connection takes the form of a power line. In this case, enabling the connection may be as easy as, once identification has been cross-checked, closing a switch of each the charging station and BEV. Equipping the charging station with such switch is also crucial in environments where excess humidity or other safety considerations may require for an immediate break of the electrical circuit to interrupt any current carried by the power line.

In an alternative embodiment that trades off speed of charge for improved safety, convenience, and ease of use, the charging station makes use of inductive charging. In this case, the connection takes the form of the electromagnetic field (EM field, EMF) produced by electrically charged components of the charging station to transfer energy to the BEV. In electrical engineering terminology, the respective conductors of the charging station and BEV in such embodiment would be referred to as mutual-inductively coupled or magnetically coupled.

It is noted that multiple BEVs may be thus coupled to a single charging station, for instance, where a charging station is embedded into a taxicab stand. By a taxicab stand, also known as a taxi rank, cab stand, taxi stand, cab rank, or hack stand, is meant a queue area on a street or on private property where taxicabs line up to wait for passengers. In this case, the BEV would take the form of an electric taxi.

Preferably, both the charging station and BEV are configured to periodically verify the identification of their respective counterpart. In response to detecting a change in identity of its correspondent, any of the two devices will abort the charging process immediately to prevent electricity theft. Such termination could also be triggered by a mere disruption of current flow, which disruption may be detected by either the charging station or BEV.

As a particular benefit of connecting the charging station and BEV by means of a power line, this exemplary configuration enables the devices to make use of power line communication (PLC). Here, PLC, also known as power line digital subscriber line (PDSL), mains communication, power line telecom (PLT), power line networking (PLN), or broadband over power lines (BPL), is any method of carrying data on a conductor also used for electric power transmission.

By means of the power line, the charging station delivers electricity to the BEV. Upon reaching a satisfactory SOC, the BEV will signal completion to the back-end system, requesting the latter to finalize the charging process and initiate payment. In response to receiving this completion signal, the back-end system will order the charging station and BEV to stop electricity transmission by opening their respective switches.

In an alternative embodiment, the electric vehicle may conversely deliver electricity to the charging station. In the context of energy storage, the latter option is commonly called vehicle-to-grid (V2G) transmission if the charging station is attached to an electrical grid as described above. In a wider sense, V2G may also refer to a scenario where the BEV throttles its charging rate for the purpose of energy demand management (EDM). EDM, also known as demand-side management (DSM), entails actions that influence the quantity or patterns of use of energy consumed by end users, such as by targeting reduction of peak demand during periods when energy-supply systems are constrained.

Both the charging station and BEV may be adapted to measure the amount of electricity transmitted, transmitting their respective measurement to the back-end system upon completion of the charging process. Based on the owner's or operator's established identity, he or she may subsequently be billed for the energy consumed. Such billing is usually performed under control of the back-end system, possibly using a built-in user interface of the BEV to provide system feedback.

As a further advantage of this embodiment, the offloading of intelligence on to the BEV and back-end system allows for a competitive pricing of the charging station. For instance, the back-end system, instead of the charging station, defines and controls the start time, duration, and intensity of the charging process and obtains any payment on the part of the energy consumer. The cost-effectiveness thus achieved is a crucial factor in the deployment of public charging stations which may become subject to vandalism and theft.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of connecting a first device and a second device, which method comprises identifying the first device to the second device by means of a first identification, identifying the second device to the first device by means of a second identification, identifying the first device and the second device to a back-end system by means of the first identification and the second identification, verifying the first identification and the second identification on the back-end system, sending a key to the first device and the second device, and, in response to receiving the key, enabling a connection between the first device and the second device.

2. Method as in claim 1 wherein the first device is a charging station and the connection comprises a power line.

3. Method as in claim 2 wherein the second device is an electric vehicle.

4. Method as in claim 3 which further comprises delivering electricity from the charging station to the electric vehicle.

5. Method as in any of claims 3 or 4 which comprises the preliminary step of signaling a power demand of the electric vehicle.

6. Method as in claim 5 wherein the power demand is signaled by means of mobile radio communication.

7. Method as in claim 6 wherein a position of the electric vehicle is transmitted with the signal.

8. Method as in any of claims 4 to 7 which further comprises measuring the electricity by the charging station.

9. Method as in claim 3 which further comprises delivering electricity from the electric vehicle to the charging station.

10. Method as in any of claims 2 to 9 wherein the first device and second device communicate over the power line.

11. Method as in any of claims 2 to 10 wherein the first device and the back-end communicate over an electrical grid.

12. Method as in any of the preceding claims which further comprises identifying an owner of the second device.

13. Method as in claim 11, when dependent on claim 4, which further comprises billing the owner for the electricity.

14. Method as in any of the preceding claims wherein the first device is controlled by means of an embedded system.
